# EUROPEAN PATENT SPECIFICATION

(11) **EP 0 174 619 B1**
(45) Date of publication and mention of the grant of the patent: **23.06.1993**
(21) Application number: 85111303.5
(22) Date of filing: 06.09.1985
(51) Int. Cl.: B25J 18/06, B25J 9/18, B25J 17/00, B25J 3/04, B25J 13/06

(54) **Industrial robot with servo system**
Industrieroboter mit Servosystem
Robot industriel à système-servo

(30) Priority: 07.09.1984 JP 187833/84; 07.12.1984 JP 258924/84
(43) Date of publication of application: 19.03.1986
(73) Proprietor: SONY CORPORATION, Tokyo 141 (JP)
(72) Inventor: Ishida, Tatsuzo, Shinagawa-ku Tokyo (JP); Hori, Kazuhito, Shinagawa-ku Tokyo (JP); Nakamura, Shigeru, Shinagawa-ku Tokyo (JP)
(74) Representative: Schmidt-Evers, Jürgen, Dipl.-Ing.

(56) References cited:
- EP-A- 0 110 347
- DE-A- 3 139 674
- US-A- 4 341 502
- US-A- 4 348 142

## Description

### BACKGROUND OF THE INVENTION

The present invention relates generally to an industrial robot with a servo system for operating robot arms so as to position a working end at a predetermined working position on a workpiece. More specifically, the invention relates to a multi-axis robot and an operation control system for actuating robot arms from an initial position to the working position.

Such an industrial robot is known from US 4,341,502. There, a robot is disclosed as comprising a base, a working end equipped with a tool, an arm means supporting said working end and being supported by said base, and a motor device for driving said arm means. As the arm means is of the parallelogram type, control of this arm means is simple. However, in case of a robot comprising an arm means having a number of arms, each being linked to the other at their respective end, thus forming a multi-link snake, control of the arm means is quite different and much more difficult. US 4,341,502 does not disclose how to drive or how to control such a multi-link arm means of an industrial robot.

In recent years, industrial robots have become popular in various industries because of their capacity for accurate repetition and relatively high efficiency. Since one of the most important advantages of installing industrial robots is high efficiency in repeating simple operations, robots are required to operate at ever higher speeds. However, various factors limit acceleration of robot operations. One important factor preventing robots from being operated at ultimate speed is the inertial pseudo-forces generated during robot operation. Especially, the inertia of the robot arm or arms limits the maximum speed of robot arm movement.

Therefore, in order to enable robots to be operated at higher speeds, the inertia of the robot arms must be reduced. Also, it is necessary to stop the robot at precisely the desired positions during its operation.

In order to accurately stop a robot at a desired position, a robot arm is operated through an initial acceleration zone, an intermediate constant speed zone and a final deceleration zone. In conventional robot operation, in order to move the working end of the robot to the working position, the working end must pass one or more transient points where the robot arm comes essentially to rest. For example, assuming the working end moves from an initial point to a working point through an intermediate transient point which does not fall on the straight line connecting the initial point and the working point, acceleration zones, constant speed zones and deceleration zones must be defined both between the initial point and the intermediate point and between the intermediate point and the working point. This clearly loses time by stopping the working end at the intermediate transient point. As set out above, since the maximum robot arm operation speed is determined by the distance through which the robot arm moves and the acceleration and deceleration characteristics of the robot servo system, stopping the robot at the transient point prevents the robot from being operated at its highest possible speed.

### SUMMARY OF THE INVENTION

An object of the present invention is to provide an industrial robot which can operate at higher efficiency than the conventional robots.

This object is achieved by the characterizing features of claim 1 in the case of an industrial robot having two servo systems for operating two robot arms pivotally connected with each other, one arm being pivotally supported by a base and the other arm supporting the working end equipped with a tool.

In case of an industrial robot having one servo system for operating one arm, the above object is solved by the characterizing features of claim 13.

The features of claim 27 solve the aforementioned object in the case of a process utilizing an industrial robot having a servo system comprising two servo components for driving arm means in two directions, one being perpendicular to the other.

Further features and advantages of the present invention result from the remaining claims.

### BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiments but are for explanation and understanding only.

In the drawings:
Fig. 1 is a fragmentary perspective illustration of the overall system of the preferred embodiment of an industrial robot according to the invention;
Fig. 2 is an enlarged side elevation in partial section of the preferred embodiment of the inventive robot;
Fig. 3 is a further enlarged section showing how a servo motor for a movable robot arm is mounted;
Fig. 4 is a section taken along line IV - IV of Fig. 3;
Fig. 5 is a section taken along line V - V of Fig. 4;
Fig. 6 is a fragmentary illustration of a drive connection between the output shaft of the servo motor and a rotary shaft of the movable arm by means of a driving belt;
Fig. 7 is a side elevation of the drive belt as viewed along the arrow VII of Fig. 6;
Fig. 8 is an enlarged section taken along line VIII - VIII of Fig. 7;
Fig. 9 is a diagram in elevation of the trace of the working end of the robot as operated according to the preferred embodiment of the control process of the invention;
Fig. 10 is a schematic block diagram of the preferred embodiment of a controller for controlling robot operation, according to the invention; and
Fig. 11 is a flowchart of a robot control program executed by the controller of Fig. 10.

### DESCRIPTION OF THE PREFERRED EMBODIMENT

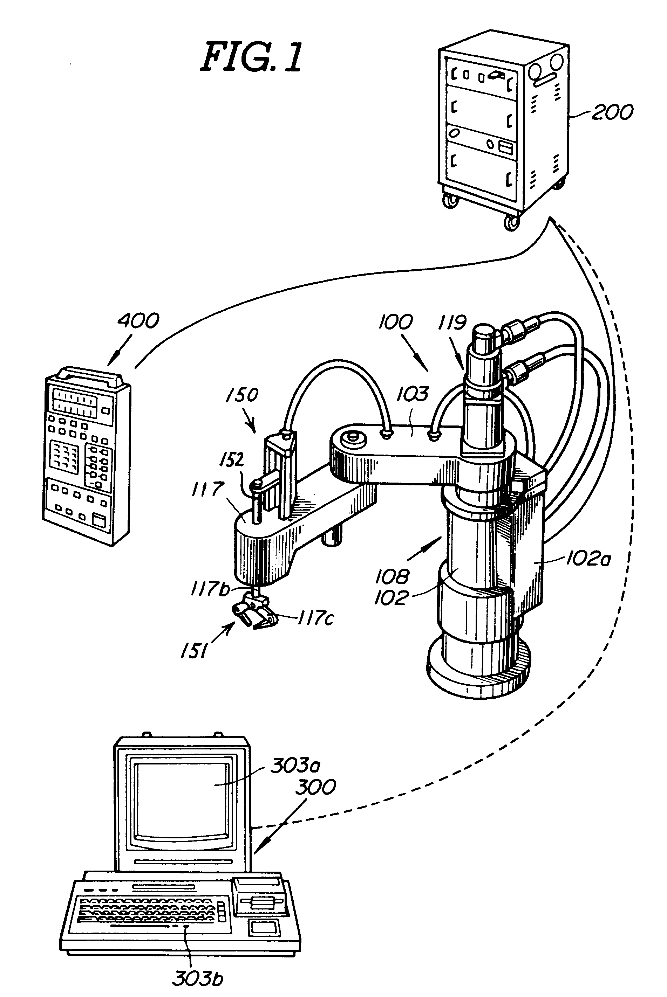

Referring now to the drawings, particularly Fig. 1, an industrial robot 100 is accompanied by a controller 200, a keyboard unit 300 including a keyboard array 303b and a monitor screen 303a, end a teaching box 400.
The robot 100 has a first pivotal arm 103 and a second pivotal arm 117. The first pivotal arm 103 is supported by and horizontally extends from a base 102. The first pivotal arm 103 pivots about a first vertical axis 103a. The second pivotal arm 117 is pivotally supported by and horizontally extends from the free end of the first arm 117. The second pivotal arm 117 is horizontally pivotable about a second pivot axis 117a and carrys a wrist 117b. The wrist 117b is capable of grasping tools, such as a chuck 117c, for performing predetermined operations.

The robot 100 has a first servo system 108 for driving the first pivotal arm 103 and a second servo system 119 for driving the second pivotal arm, which together drive the wrist 117b and the chuck 117c forming a working end 151 of the robot along a predetermined trace. The first and second servo systems are connected to the controller 200, which controls their operation. The controller 200 is, in turn, connected to the keyboard unit 300 and the teaching box 400. The keyboard unit 300 accepts programming for robot operation through its keyboard array 303b. Programming of the robot operation includes input of position data including position data specifying an initial working end position and position data specifying one or more working positions. The mode of operation of the teaching box 400 is well known and it allows fine positioning of the working end at the working position or positions.

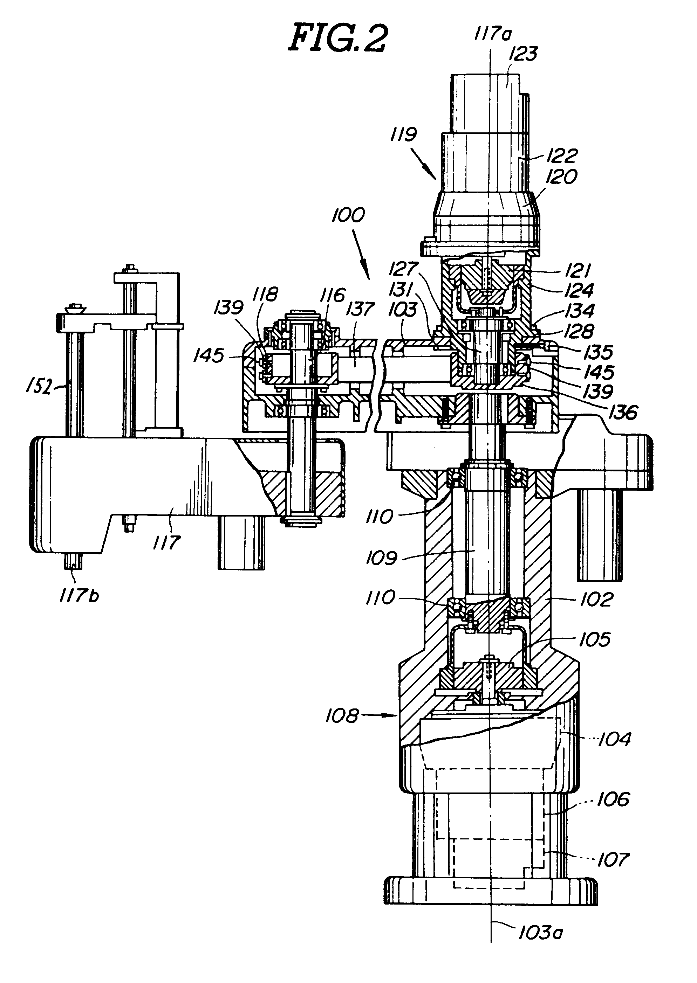

As shown in Figs. 2 to 5, the first pivotal arm 103 is pivotally mounted at the top of the base 102. The first arm 103 is connected mechanically to the first servo system 108 which comprises a servo motor 104 and a reduction gear device 105, which, in this preferred embodiment, may be a reduction gear device available as "Harmonic Drive" from Harmonic Drive Systems Inc. The first servo system 108 also includes an encoder 106 and a tacho-generator 107. The servo motor 104 is connected to a first drive shaft 109 via the reduction gear device 105. The servo motor 104, the reduction gear device 105, the encoder 106 and tacho-generator 107 of the first servo system 108 are mounted on and supported by the base 102. The first drive shaft 109 is rotatably supported by the base 102 by means of upper and lower bearings 110. The upper end of the first drive shaft 109 is fixed to the first pivotal arm 103 so that the first pivotal arm pivots with the first drive shaft 109.

The first pivotal arm 103 has an upper plate 111. The upper plate 111 of the first pivotal arm 103 has a slightly-elongated rectangular hole 112 with rounded corners. The hole 112 is centered over the drive shaft 109. Slots 113 elongated parallel to the longitudinal axis of the first pivotal arm 103 are also formed through the upper plate 111 near the corners of the hole 112.

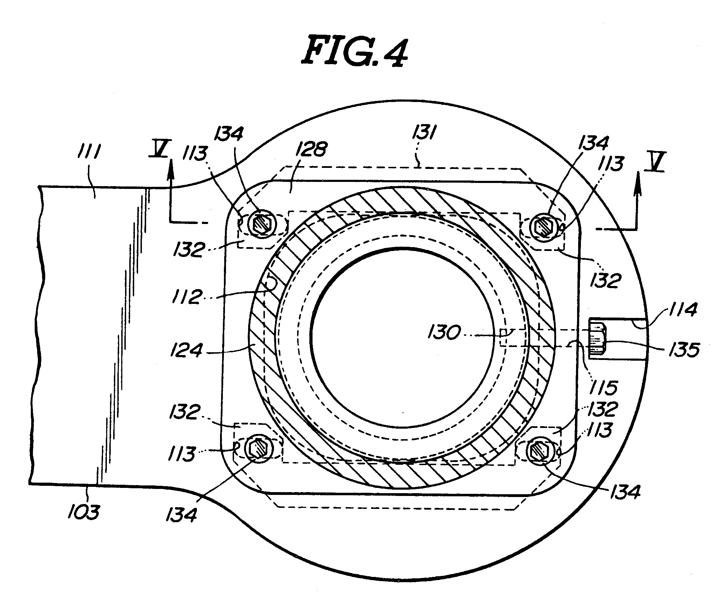

The first pivotal arm 103 has an axially aligned recess 114 in its upper edge, as shown in Fig.4. A threaded hole 115 extends axially from the recess 114 toward the drive shaft 109.

The first pivotal arm 103 rotatably supports a vertically extending rotary shaft 116 at its free end. The rotary shaft 116 extends downwards from the first pivotal arm and is firmly fixed to one end of the second pivotal arm 117 at its lower end. A driven pulley 118 is received within the first pivotal arm and is fixed to the upper end of the rotary shaft 116. The driven pulley 118 is driven by the second servo system 119.

The second servo system 119 comprises a second servo motor 120, a reduction gear device 121 (Harmonic Drive), an encoder 122 and a tacho-generator 123. The reduction gear device 121 of the second servo system 119 is housed within a housing 124 with a chamber 125 which opens upwards. The housing 124 has a lower support section 126. The reduction gear device 121 is connected to a drive shaft 127 which is rotatably supported by the support section 126 of the housing 124. The lower end of the drive shaft 127 extends downwards from the support section 127. The second servo motor 120 is mounted atop the housing 124 and so closes the upper open end of the housing. The encoder 122 and the tachogenerator 123 are mounted on top of the housing together with the second servo motor 120.

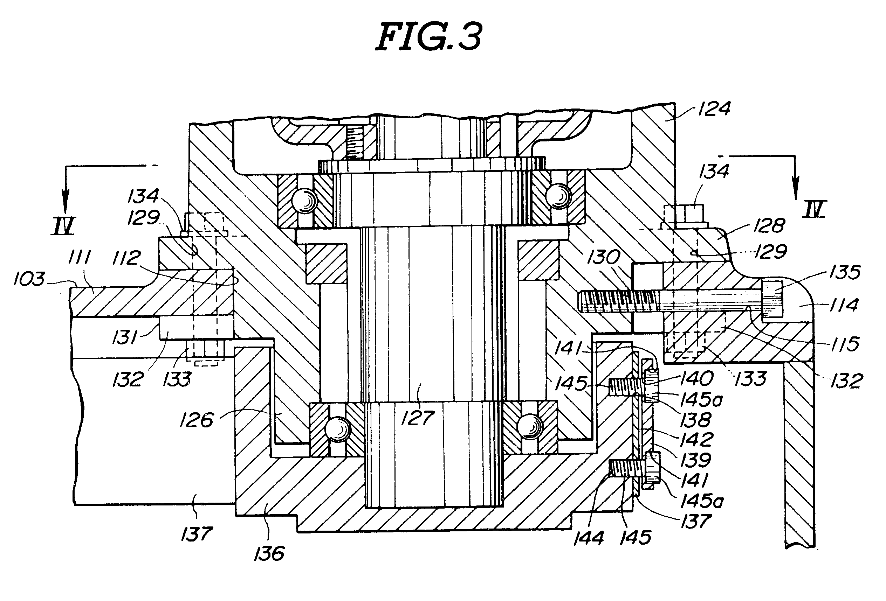

An essentially square or rectangular flange 128 extends horizontally from the outer periphery of the housing 124. Through openings 129 pass through each corner of the flange 128. The housing 124 also has a threaded blind opening 130, as shown in Fig. 3. The support section 126 of the housing 124 conforms to the hole 112 in the upper plate 111 of the first pivotal arm 103. When the housing 124 is mounted on the upper plate 111 of the first pivotal arm 103 with the support section 126 extending through the hole 112, the flange 128 contacts the edges of the hole 112. In this position, the through openings 129 in the flange 128 can be aligned with the slots 113. Also, the threaded opening 130 can be aligned with the opening 115. A fastening plate or plates 131 are attached to the lower surface of the upper plate 111. The fastening plate 131 has sections 132 to which fastening nuts 133 are secured. The fastening plate 131 is attached to the upper plate 111 so that the fastening nuts 133 align with the slots 113 on the opposite side of the flange 128. Fastening bolts 134 pass through the openings 129 and the slots 113 to engage the fastening nuts 133. Thus, the housing 124 supporting the second servo system 119 is firmly mounted on the upper plate 111 of the first pivotal arm 103.

With this arrangement, since the slots 113 in the first pivotal arm 103 lie substantially parallel to the longitudinal axis of the first pivotal arm 103, the first pivotal arm 103 and the housing 124 can be displaced somewhat along the longitudinal axis of the arm 103. This allows adjustment of the position of the second servo system 119 relative the first pivotal arm 103.

An adjusting bolt 135 extends through the recess 114 and the hole 115 and engages the threaded hole 130 in the housing 24.

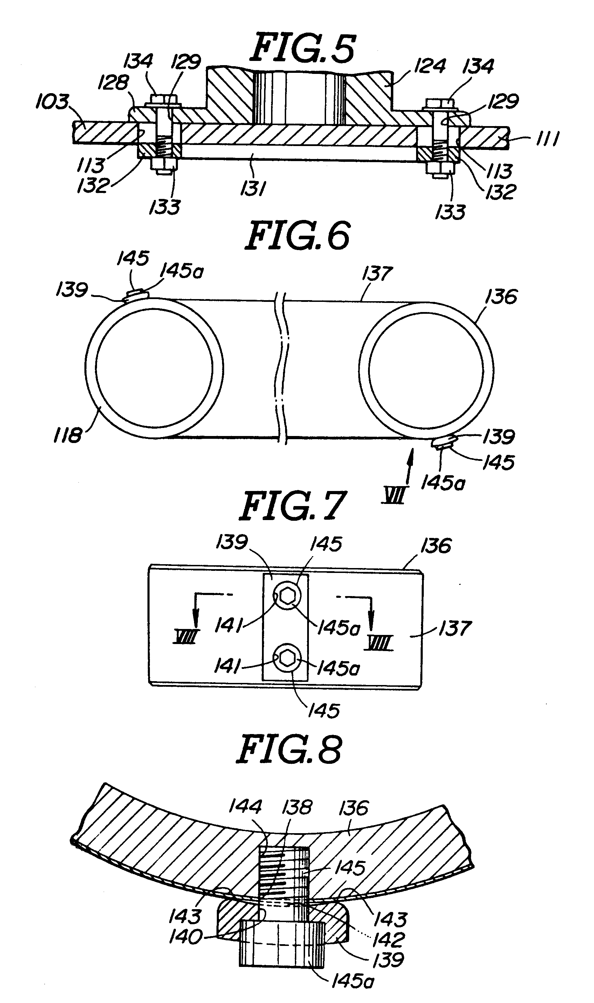

A driving pulley 136 is fixed to the lower end of the output shaft 127 which is driven by the second servo motor 120 via the reduction gear device 121. A steel belt 137 is stretched between the driving pulley 136 and the driven pulley 118. The steel belt 137 is an endless loop of SK hardened steel. The steel belt 137 is formed with vertically aligned pairs of through boles 138. Two pairs of holes 138 are spaced precisely halfway around the loop 137, as shown in Fig. 6. A fastener plate 139 is attached to each of the pulleys 118, 136 via the pairs of holes 138. The fastener plates 139 are slightly narrower than the dimension between the flanges of the driving and driven pulleys 136 and 118. A pair of recesses 141 are formed in the outer periphery of the fastener plates 139 opposite the holes 138. A pair of holes 140 pass through each fastener plate 139 from the bottoms of the recesses 141. The through holes 140 are respectively aligned with the through holes 138. The inner face of the fastener plate 139 opposing the steel belt 137 has a radius of curvature smaller than the outer radius of the pulleys 136 and 118. Therefore, the inner face of the fastener plate 139 contacts the steel belt 137 along lines at its opposite edges to hold the steel belt 137 in place on the pulleys as explained below. The holes 138 and 140 are also aligned with threaded holes 144 in the driving and driven pulleys 136 and 118.

Fastening bolts 145 extend through the holes 138 and 140 and engage the corresponding threaded holes 144. By tightening the fastener bolts 145 firmly into the corresponding threaded holes 144, the fastener plates 139 are pulled tightly against the corresponding driving and driven pulleys 136 and 118. Thus, the fastener plates 139 clamp the steel belt 137 in place on the pulleys 136, 118 without applying force to the relatively weak section near the holes 138. As apparent from Fig. 8, the heads 145a of the fastener bolt 145 protrude approximately halfway out of the fastener plates 139.

The tension on the steel belt 137 is adjusted by means of the aforementioned adjusting bolt 135. First, the fastening bolts 134 which fix the housing 124 to the upper plate 111 of the first pivotal arm 103 are loosened so that the housing 124 can be moved along the longitudinal axis of the first pivotal arm 103. At this time, the fastening bolts 134 move along the slots 113. Then, the adjusting bolt 133 is turned in the loosening or tightening direction until the desired tension on the steel belt is obtained. After adjustment of the belt tension is completed, the fastening bolts 134 are again tightened to fix the housing 124 to the first pivotal arm 103.

A third servo system 150 is mounted near the free end of the second pivotal arm 117. The third servo system 150 controls vertical positioning of the working end 151 of the robot. Alternatively, the third servo system 150 may control rotation of the working end, whereby the desired robot operation is actually executed. In the arrangement of Fig. 1, the third servo system 150 drives the vertically movable shaft 132 vertically to position a chuck 151 serving as the working end. The third servo system 150 also controls the gripping and releasing motions of the chuck 151 which cause a component to be set up for assembly to the workpiece at the working position.

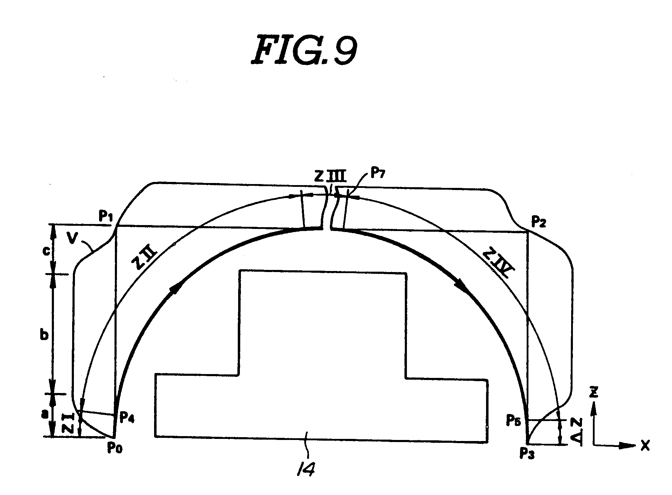

In the preferred embodiment, the controller 200 is programmed to control the first, second and third servo systems so as to move the working end from its initial position Pₒ to the working position P₃ along the trace illustrated in thick, solid lines in Fig. 9.

In conventional robot operation, in order to move the working end of the robot from the initial position Pₒ to the working position P₃ around an obstacle 14, the working end is first moved to the intermediate point P₁ along a straight path Pₒ-P₁. Then, the working end stops at the point P₁ and thereafter is moved to a second intermediate point P₂ along a straight path P₁-P₂. The working end is again stopped at the second intermediate point P₂ and thereafter moved to the working poisition P₃ along a straight path P₂-P₃. In the first zone Pₒ-P₁, the working end is first accelerated to a predetermined top speed within an acceleration zone a. After accelerating to the top speed, the velocity of the working end is held constant at the top speed throughout a constant speed zone b and then decelerated to rest at the intermediate point P₁ within a deceleration zone c. Similarly, in the second zone P₁-P₂ and the third zone P₂-P₃, acceleration zones, constant speed zones and deceleration zones are defined. This clearly lowers the average velocity of the working end of the robot.

According to the preferred embodiment, the working end is controlled by the controller such that it moves along a single non-linear trace with no intermediate points at which the working end must come to rest.

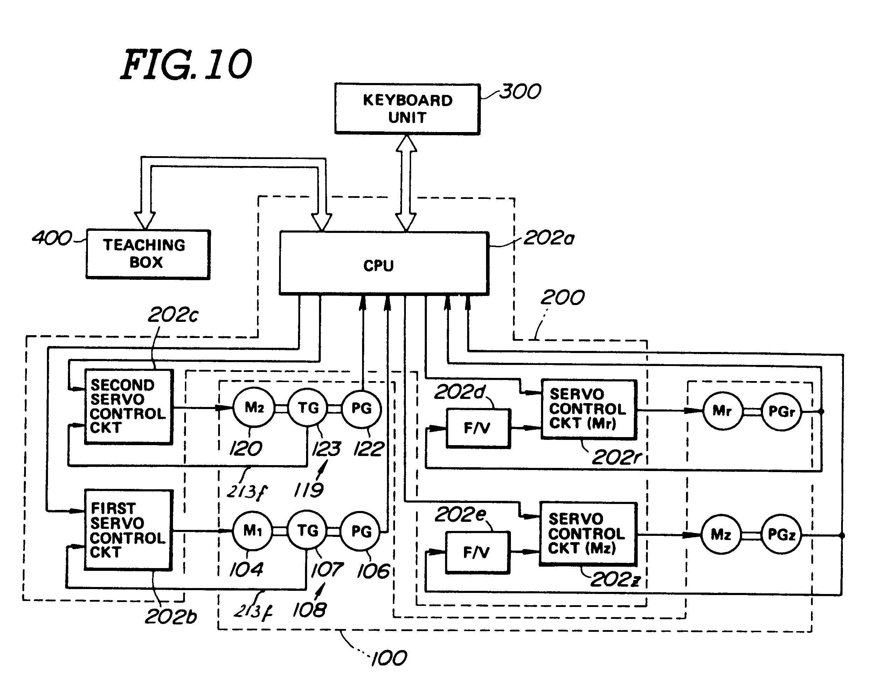

Fig. 10 is a circuit diagram of the robot control system which carrys out non-stop, non-linear robot positioning as set out above, according to the preferred embodiment of the invention. In Fig. 10, the controller 200 comprises CPU 202a connected to the keyboard unit 300 and the teaching box 400. The CPU 202a is also connected to servo control circuits 202b, 202c, 202r and 202z. The servo control circuit 202b is connected to the first servo motor 204(M₁) which is, in turn, connected to the tachogenerator 107(TG) and the encoder 106(PG). The tachogenerator 107 outputs a motor speed indicative signal 213f to the servo control circuit 202b as a feedback signal. On the other hand, the encoder 106 detects the angular position of the motor shaft and thus of the first pivotal arm 103. The encoder 106 outputs an angular position indicative signal as a feedback signal to CPU 202a. Similarly, the servo control circuit 202c is connected to the second servo motor 120(M₂) which is, in turn, connected to the tachogenerator 123(TG) and the encoder 122(PG). The tachogenerator 123 outputs a motor speed indicative signal 213f to the servo control circuit 202c as a feedback signal. The encoder 122 detects the angular position of the motor shaft and thus of the second pivotal arm 117. The encoder 106 outputs an angular position indicative signal as feedback signal to CPU 202a.

The servo control circuit 202r is connected to a servo motor Mᵣ which serves to control rotation of the working end. The servo motor Mᵣ is connected to an encoder PGᵣ which detects the angular position of the servo motor Mᵣ and thus of the working end, and outputs an angular position indicative signal to CPU 202a as a feedback signal. Also, the angular position indicative signal of the encoder PGᵣ is send to the servo control circuit 202ᵣ as a feedback signal, via a frequency-to-voltage (F/V) converter 202d.

The servo motors Mᵣ and the encoder PGᵣ may be housed in a connector box 102a fixed to the base 102.

The servo control circuit 202z is connected to a servo motor M_{z} which serves to control vertical displacement of the working end. The servo motor M_{z} is connected to an encoder PG_{z} which detects the angular position of the servo motor M_{z} and thus of the working end, and outputs an angular position indicative signal to CPU 202a as a feedback signal. Also, the angular position indicative signal of the encoder PG_{z} is sent to the servo control circuit 202z as a feedback signal, via a frequency-to-voltage (F/V) converter 202e.

The servo motor M_{z} and the encoder PG_{z} may be mounted near the free end of the second pivotal arm 117 as set forth above.

The controller 200 further comprises a memory 204 which stores the initial position data of the working end of the robot, the working position data, and operation program input through the keyboard unit 300 and/or the teaching box 400.

CPU produces a first arm control signal consisting of an angular position control component and a speed control component, a second arm control signal consisting of an angular position control component and a speed control component, a working end rotation control signal and a working end vertical position control signal.

The first arm control signal is sent to the servo control circuit 202b to control the driving direction and driving speed of the first servo motor 104. Similarly, the second arm control signal is sent to the servo control circuit 202c to control the driving direction and driving speed of the second servo motor 120.

The F/V converters 202d and 202e serve as means for producing motor speed representative signals as feedback signals for the servo control circuits 202r and 202z respectively. The servo control circuit 202r receives the working end rotation control signal and controls the angular position of the working end of the robot in accordance with a control signal from CPU 202a, described later. Similarly, the servo control circuit 202z receives the working end vertical position control signal from CPU 202a and controls the vertical position of the working end.

According to the preferred embodiment of the invention, the controller 200 is programmed to move the working end along the thick, solid curve of Fig. 9. The path of the working end includes no intermediate points at which the working end must come to rest. Therefore, the working end moves through a single acceleration zone starting from the initial position Pₒ, a single deceleration zone ending at the working position P₃ and a single but rather long constant speed zone in between the acceleration zone and the deceleration zone.

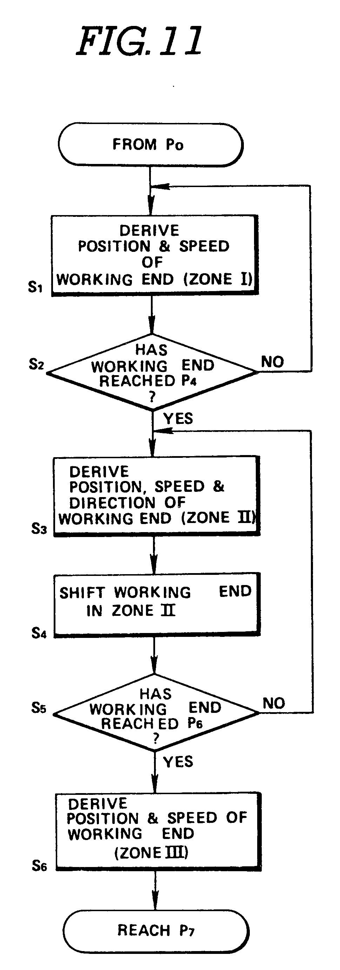

In order to facilitate better understanding of the control process according to the present invention, the control operations of the preferred embodiment of robot according to the invention will be described herebelow with reference to Figs. 9 and 11. In shifting the working end from its initial position Pₒ to the working position P₃ around the obstacle 14, the working end follows both non-linear traces and straight stretches, as shown in Fig. 9.

Position data for the initial position Pₒ, the working position P₃ and intermediate points P₁ and P₂ in a unique three-dimensional robot coordination system are received as operation parameters. An ideal or desired moving speed variation pattern for the working end determined on the basis of acceleration and deceleration characteristics of the servo motors is preset in the memory 204. Also, an initial lift distance through which the working end must be raised is set in the memory 204 through the keyboard unit 300 and/or the teaching box 400. The final drop distance through which the working end is lowered to the working position is also set in the memory 204. The lift and drop distance values may be given coordinates of the points P₄ and P₅ at which lift ends and drop begins, respectively. CPU 204 derives the distances between the initial position Pₒ and the intermediate point P₁, between the intermediate point P₂ and the working position P₃ and between the intermediate points P₁ and P₂. On the basis of the distance data, the vertical moving speed variation pattern data, and the horizontal moving speed variation pattern data, CPU derives the trace, including an intial straight zone (ZI:Pₒ to P₄), a first curved zone (ZII:P₄ to P₆) following the initial straight zone, an intermediate straight zone (ZIII:P₆ to P₇), a second curved zone (ZIV:P₇ to P₅) and final straight zone (ZV:P₅ to P₃). The lengths of each straight and curve zones ZI, ZII, ZIII, ZIV and ZV vary according to the unique speed variation patterns of the specific robot and the preset position data. CPU 202a derives the trace of the working end in the three-dimensional robot coordinate system, which trace is fully characterized by the straight and curved zones ZI, ZII, ZIII, ZIV and ZV, the speed and direction of the working end at specific points along the derived trace on the basis of the preset horizontal speed variation pattern and the preset vertical speed variation pattern.

It should be noted that the speed and the direction at each specific point in the curve zones is given as a vector with a speed component in a first direction, e.g. along the x-axis of the robot coordinate system and a speed component in a second direction, e.g. along the z-axis. Although Fig. 9 shows movement of the working end in a two-dimensional coordinate system defined by the x- and z-axes for simplification of the disclosure, the working end in practice moves through a three-dimentional robot coordinate system. In this case, the vector is a composite of a speed component in the first direction, e.g. along the x-axis of the robot coordinate system, a speed component in a second direction, e.g. along the z-axis and a speed component in the third direction, e.g. along the y-axis.

The acceleration and deceleration characteristics of servo motors employed in the preferred embodiment of the industrial robot have been illustrated by the thin, solid curves V in Fig. 9. As seen from the curve V, the servo motor accelerates and decelerates in such a manner that, in the acceleration zone a, the motor speed increases non-linearly and in fact can be expressed as a sin-curve, and, in the deceleration zone, the motor speed also decreases non-linearly along a sin-curve. By utilizing servo motors with acceleration and deceleration characteristics which cause non-linear motor speed variation, smooth transistions between the acceleration zone and the constant speed zone, and between the constant speed zone and the deceleration zone can be achieved. In addition, the working end can be steadily lowered onto the working position by means of the characteristics V of Fig. 9.

Based on the data as set out above, CPU 202a performs position and speed control by deriving a first arm control signal, a second arm control signal, a working end rotation control signal and a working end vertical position control signal. CPU 202a also derives the coordinates for each boundary point between the straight zones and the curved zones and stores them in the memory 204. Then, the control program of Fig. 11 is periodically executed, e.g. every 10 msec. The flowchart of Fig. 11 shows control operations actuating the working end through the initial straight zone ZI, the first curved zone ZII and the intermediate straight zone ZIII.

As will be clear from the steps S1 and S2, as long as the working end remains in the intial straight zone ZI, CPU 202a, outputs only the working end vertical position control signal to the servo control circuit 202z to vertically actuate the working end. The servo motor Mz is thus driven to accelerate the motor according to its own acceleration characteristics. During upward movement of the working end along the z-axis, the target position data and target motor speed value are cyclically derived, e.g. every 10 msec. in step S1. The target position data and target motor speed value are compared to the actual position data provided by the encoder PG_{z} and the actual motor speed value represented by the output of the F/V converter 202e. The servomotor M_{z} is controlled on the basis of the deviation between the target position data and the actual position data and the target motor speed value and the actual motor speed value.

When the working end reaches the point P₄, the first and/or second arm control signals are output to activate the first and second servo motors 103 and 117. Therefore, the speed and direction of the working end is given hereafter as the vector sum of the instantaneous speed in the z-direction and the instantaneous speed in the x-direction. During movement of the working end within the first curve zone ZII, target position data and the vector data representative of the speed and direction are derived at a step S3. On the basis of the derived target position data and the vector data, the servo motors are controlled to drive the working end along the determined trace, at a step S4. At a step S5, the instantaneous working end position is checked to see whether the working end has reached the point S₆. Steps S3 through S₅ are repeated until the working end reaches the point S₆. Similarly to the control of the movement of the working end within the initial straight zone ZI, feed-forward control is performed for accuracy of the position and speed control.

When the working end reaches the point S₆, the target position and target motor speed for the first and second servo motors 103 and 117 are derived at a step S6, and this step is repeated until the working end reaches point P₇.

As will be appreciated, position and speed control within the intermediate straight zone III, the second curved zone ZVI and the final straight zone ZV is similar to that set out above.

As set forth above, according to the present invention, since the second servo motor 120 is mounted on the base 102, the load on the second pivotal arm 117 is significantly reduced. As a result, the inertia of the first and second pivotal arms is much smaller than in conventional robot systems in which the second servo motor is mounted at the free end of the first pivotal arm. This allows the second pivotal arm to be pivotted at higher speeds than in conventional robot systems. Therefore, the efficiency of the robot can be improved. Furthermore, since the robot is actuated between the initial position and the working position without stopping at an intermediate point or points, the total time requjired to move the working end from the initial position to the working position can be shortened significantly. This also serves helps improve robot efficiency.

Therefore, the present invention fulfills all of the objects and advantages sought therefor.

While the present invention has been disclosed in detail in terms of the specific embodiment of the invention, the invention should be appreciated as being capable of embodiment in various ways. Also, the specific embodiment disclosed hereabove can be modified in many ways without departing from the invention. Therefore, the invention should be understood to include all possible embodiments and modifications to the preferred embodiment encompassed by the principles set out in the appended claims.

## Claims

1. An industrial robot comprising:
a base (102),
a working end (117b,117c) equipped with a tool for performing predetermined operation at a predetermined working position (CP₃),
an arm means (103,117) supporting said working end (117b,117c) and supported by said base (102), said arm means (103,117) including a first arm (103) pivotally supported by said base (102) and a second arm (117) pivotally attached to a free end of said first arm (103), a first servo system (108) mounted on said base (102) for driving said first arm, and
a second servo system (119) mounted on said base (102) for driving said second arm (117),
**characterized** in that
a servo controller (200) iteratively derives desired positions of said first and second arms (103,117) according to a predetermined schedule and outputs control signals to said first and second servo systems (108,119) for controlling the latter in accordance with said derived desired positions in such a way, that said working end (117b,117c) is shifted according to the predetermined schedule through a non-linear path, and from an initial position (Pₒ) to said working position (P₃) around an obstacle (14) known to exist therebetween without stopping said working end (117b,117c) at any intermediate point, and said servo controller further controls servo motors (104, 120) of said servo systems (108,119) based on a target speed of said servo motors (104,120) to control the speed of the working end (117b,117a) such that motor speed is increased non-linearly when accelerating and is decreased non-linearly when decelerating to smooth transition between acceleration and deceleration episodes and constant speed episodes.

2. The robot as set forth in claim 1, wherein said second servo system (119) is mounted on said first arm (103) with its vertical axis essentially aligned with the vertical axis of said first servo system (108).

3. The robot as set forth in claim 2, wherein which further comprises a mount (128) for said second servo motor (120), which mount is mounted on said first arm (103) with said vertical axis of said second servo system (119) in general alignment with said vertical axis of said first servo system (108).

4. The robot as set forth in claim 3, wherein each of said first and second servo systems (108,119) include a servo motor (104,120), and said servo motor (120) of said second servo system (119) is drivingly associated with said second arm (117) by means of a belt-drive power train (136-137-118).

5. The robot as set forth in claim 4, wherein said belt-drive power train (136-137-118) comprises a driving pulley (136) driven by said servo motor (120) of said second servo system (119), a driven pulley (118) secured to a rotatable shaft (116) attached to the end of said first arm (103) remote from said vertical axis (103a) of said first servo system (108) and secured to said second arm (117) for rotation therewith, and a belt (137) stretched between said driving and driven pulleys (136,118).

6. The robot as set forth in claim 5, wherein said belt (137) has a first and a second section located radially symmetrically about said belt (137), said belt being fixed to said driving pulley (136) at said first section and to said driven pulley (118) at said second section.

7. The robot as set forth in claim 6, wherein said belt (137) is a steel belt, and a fastener plate (139) is fitted onto each of said first and second sections of said belt (137), which fastener plates (139) are secured to said driving and driven pulleys (136,118) respectively by means of fastener bolts (145) so as to clamp said belt (137) to the peripheral wall of said pulley (136,118).

8. The robot as set forth in claim 7, wherein each of said fastener plates (139) is curved so that it clamps said belt (137) along two parallel lines.

9. The robot as set forth in claim 6, wherein said mount (128) can be shifted along the longitudinal axis of said first arm (103) to adjust the tension on said belt (137).

10. The robot as set forth in claim 1, which further comprises a third movable arm (152) driven by a third servo system (150) including a third servo motor, which third servo system (150) drives said movable arm (152) in a direction perpendicular to the plane within which said first and second arms (103,117) pivotally move.

11. The robot as set forth in claim 10, wherein said controller (200) derives the path of said working end (151) on the basis of first position data indicative of the initial position of said working end (151), second position data indicative of the working position, third position data indicative of a desired distance through which said working end (151) is to be shifted in a first direction from said initial position, fourth position data indicative of a desired distance through which said working end (151) is to be shifted in a second direction perpendicular to said first direction from a point identified by said third position data and on the basis of known acceleration and deceleration characteristics of said servo system.

12. The robot as set forth in claim 11, wherein said controller (200) derives the path of said working end (151) utilizing a first preset formula representing first acceleration and deceleration characteristics of said first servo motor (104), second preset formula representing second acceleration and deceleration characteristics of said second servo motor (120), and a third preset formula representing third acceleration and deceleration characteristics of said third servo motor.

13. An industrial robot comprising:
a base (102);
a working end (151) equipped with a tool for performing predetermined operation at a predetermined working position;
an arm means (103,117) supporting said working end (151) and supported by said base (102), said arm means (103,117) including at least one movable arm (103) relative to a predetermined axis (103a) and
a servo system (108) for driving said movable arm to a desired position, characterized in that
a servo controller (200) iteratively derives said desired position of said movable arm (103) according to a predetermined schedule and outputting a control signal to said servo system (108) for controlling the latter, said controller (200) derives said desired position on the basis of first position data indicative of the initial position of said working end (151), second position data indicative of the working position (P₃) and known acceleration and deceleration characteristics of said servo system (108) so as to drive said working end (151) between said initial position and said working position via an intermediate point offset from the straight line extending through said initial and working positions, without stopping said working end at any intermediate point, and said servo controller (200) further controls servo system (108) based on a target speed of said servo system (108) to control the speed of the working end (151) such that the servo system speed is increased non-linearly when accelerating and is decreased non-linearly when decelerating to smooth transition between acceleration and deceleration episodes and constant speed episodes.

14. The robot as set forth in claim 13, wherein said servo system (108) comprises a first servo component (104) driving said working end (151) in a first direction and a second servo component (120) driving said working end in a second direction perpendicular to said first direction.

15. The robot as set forth in claim 14, wherein said controller (200) derives said desired position of said working end (151) on the basis of first position data indicative of the initial position of said working end (151), second position data indicative of the working position, third position data indicative of a desired distance through which said working end (151) is to be shifted in said first direction from said initial position, fourth position data indicative of the desired distance through which said working end (151) is to be shifted in a second direction from a point identified by said third position data and on the basis of known acceleration and deceleration characteristics of said servo system.

16. The robot as set forth in claim 15, wherein said servo system comprises a third servo component (150) driving said working end (151) in a third direction perpendicular to said first and second directions.

17. The robot as set forth in claim 16, wherein said controller derives said desired position further based on the acceleration and deceleration characteristics of said third servo component (150).

18. The robot as set forth in claim 13, wherein said arm means includes a first arm (103) pivotally supported by said base (102) and a second arm (117) pivotally supported by a free end of said first arm (103), and said servo system (108,119) comprises a first servo system (108) mounted on said base (102) for driving said first arm (103) and a second servo system (119) on said base for driving said second movable arm (117).

19. The robot as set forth in claim 1 or 18, wherein said first arm (103) is pivotable about an essentially vertical primary axis (103a) extending through an axis of said base (102), and said second arm (117) is pivotable about an essentially vertical secondary axis (117a).

20. The robot as set forth in claim 19, wherein axes of rotation of servo motors (104,120) for said first and second servo systems (108,119) are substantially in alignment with each other.

21. The robot as set forth in claim 20, wherein said axes of rotation of said servo motors (104,120) of said first and second servo systems (108,119) are aligned with the axis of said base (102).

22. The robot as set forth in claim 1 or 18, wherein said servo motor (120) of said second servo system (119) is drivingly associated with said second arm (117) by means of a belt-drive power train (136-137-118).

23. The robot as set forth in claim 22, wherein said belt-drive power train (136-137-118) comprises a driving pulley (136) driven by said servo motor (120) of said second servo system (119), a driven pulley (118) secured to a rotatable shaft (116) attached to the free end of said first arm (103) and secured to said second arm (117) for rotation therewith, and a belt (137) stretched between said driving and driven pulleys (136,118).

24. The robot as set forth in claim 23, wherein said belt (137) has a first and a second section located radially symmetrically about the belt (137), said belt being fixed to said driving pulley (136) at said first section and to said driven pulley (118) at said second section.

25. The robot as set forth in claim 24, wherein a fastener plate (139) is fitted onto each of said first and second sections of said belt (137), which fastener plates (139) are secured to said driving and driven pulleys (136,118) respectively by means of fastener bolts (145) so as to clamp said belt (137) to the peripheral wall of said pulley.

26. The robot as set forth in claim 25, wherein each of said fastener plates (139) is curved so that it clamps said belt (137) along two parallel lines.

27. In an industrial robot having a working end equipped with a tool (117c) for performing a predetermined operation, a movable arm means (103,117) carrying said working end between an initial position and a working position and associated with a servo system comprising a first servo component (104) driving said movable arm means (103,117) in a first direction so as to drive said working end in said first direction and a second servo component (120) driving said movable arm means in a second direction perpendicular to said first direction so as to drive said working end in said second direction, a process for controlling the position of said working end comprising the steps of:
presetting first and second position data identifying said initial position and said working position respectively;
presetting third and fourth position data, said third position data representing a desired distance through which said working end is to be shifted in said first direction, and said fourth position data representing a desired distance through which said working end is to be shifted in said second direction;
presetting acceleration and deceleration characteristics of said first and second servo components;
iteratively deriving working end positions along a trace on the basis of preset data as well as deriving speed and direction of said working end at said desired position, said speed and direction being the vector sum of a first speed component in said first direction determined according to said preset acceleration and deceleration characteristics of said first servo component and a second speed component in said second direction determined according to said preset component and deceleration characteristics of said second servo component; and
operating said servo system (108,119) so as to shift said working end between said initial position and said working position without stopping at any intermediate point.

28. The process as set forth in claim 27, wherein each of said first and second servo components (104,120) increase the speed of said working end non-linearly during acceleration and decrease the speed of said working end non-linearly during deceleration to ensure smooth transition between acceleration and deceleration states and constant speed states.

29. The process as set forth in claim 28, wherein said servo system includes a third servo component driving said working end in a third direction perpendicular to said first and second directions, and said derived speed and direction of the working end is the vector sum of said first speed component, said second speed component in said third direction determined according to the acceleration characteristics of said third servo component.

## Patentansprüche

1. Industrieroboter, mit
einer Basis (102),
einer Bearbeitungsvorrichtung (117b, 117c), die mit einem Werkzeug zur Durchführung einer vorbestimmten Arbeit bei einer vorbestimmten Bearbeitungsposition ausgerüstet ist (P₃),
einer Armeinrichtung (103, 117), die die Bearbeitungsvorrichtung (117b, 117c) lagert und die durch die Basis (102) gelagert ist, wobei die Armeinrichtung (103, 117) einen ersten Arm (103), der drehbar durch die Basis (102) gelagert ist und einen zweiten Arm (117), der drehbar an einem freien Ende des ersten Arms (103) befestigt ist, aufweist,
einem ersten Servosystem (108), das auf der Basis (102) zum Antrieb des ersten Arms montiert ist, und
einem zweiten Servosystem (119), das auf der Basis (102) zum Antrieb des zweiten Arms (117) montiert ist,
**dadurch gekennzeichnet**, daß
eine Servosteuerung (200) schrittweise die gewünschte Position des ersten und zweiten Arms (103, 117) nach einer vorbestimmten Tabelle berechnet und Steuersignale an das erste und zweite Servosystem (108, 119) zur Steuerung des letzteren gemäß der berechneten gewünschten Position in solch einer Weise ausgibt, daß die Bearbeitungsvorrichtung (117b, 117c) gemäß der vorbestimmten Tabelle auf einer nichtlinearen Bahn von einer Ausgangsposition (Pₒ) zur Bearbeitungsposition (P₃) um ein bekanntes dazwischenliegendes Hindernis (14) herum Verschoben wird, ohne daß die Bearbeitungsvorrichtung (117b, 117c) an einem Zwischenpunkt angehalten wird, und daß die Servosteuerung weiterhin Servomotore (104, 120) des Servosystems (108, 119) aufgrund einer Zieldrehzahl der Servomotore (104, 120) steuert, um die Geschwindigkeit der Bearbeitungsvorrichtung (117b, 117c) so zu steuern, daß die Motordrehzahl beim Beschleunigen nichtlinear vergrößert wird und beim Verzögern nichtlinear vermindert wird, um den Übergang zwischen der Beschleunigungsphase, der Verzögerungsphase und der konstanten Geschwindigkeitsphase zu glätten.

2. Roboter nach Anspruch 1, bei dem das zweite Servosystem (119) auf dem ersten Arm (103) montiert ist, wobei dessen vertikale Achse in wesentlichen mit der vertikalen Achse des ersten Servosystems (108) fluchtet.

3. Roboter nach Anspruch 2, der weiter eine Halterung (128) für den zweiten Servomotor (120) aufweist, wobei die Halterung auf dem ersten Arm (103) mit der vertikalen Achse des zweiten Servosystems (119) im allgemeinen mit der vertikalen Achse des ersten Servosystems (108) fluchtend montiert ist.

4. Roboter nach Anspruch 3, wobei das erste und zweite Servosystem (108, 119) jeweils einen Servomotor (104, 120) aufweist und wobei der Servomotor (120) des zweiten Servosystems (119) antriebsmäßig mit dem zweiten Arm (117) über einen Riemenantrieb (136-137-118) zur kraftübertragung verbunden ist.

5. Roboter nach Anspruch 4, wobei der Riemenantrieb (136-137-118) zur Kraftübertragung eine antreibende Riemenscheibe (136) aufweist, die durch den Servomotor (120) des zweiten Servosystems (119) angetrieben wird, eine angetriebene Riemenscheibe (118), die mit einer verdrehbaren Welle (116) verbunden ist, die am Ende des ersten Arms (103) von der vertikalen Achse (103a) des ersten Servosystems (108) beabstandet befestigt ist und am zweiten Arm (117)gesichert ist, um sich mit diesem zu verdrehen, und einen Riemen (137), der zwischen der treibenden und getriebenen Riemenscheibe (136, 118) gespannt ist.

6. Roboter nach Anspruch 5, wobei der Riemen (137) einen ersten und zweiten Bereich aufweist, die radialsymmetrisch um den Riemen (137) angeordnet sind, wobei der Riemen an der treibenden Riemenscheibe (136) in dem ersten Bereich und an der getriebenen Riemenscheibe (118) in dem zweiten Bereich befestigt ist.

7. Roboter nach Anspruch 6, wobei der Riemen (137) ein Stahlriemen ist, und wobei eine Befestigungsplatte (139) auf jedem ersten und zweiten Bereich des Riemens (137) angeordnet ist, wobei die Befestigungsplatten (139) mit der treibenden bzw. angetriebenen Riemenscheibe (136, 118) durch Befestigungsschrauben (145) so befestigt sind, um den Riemen (137) an der peripheren Wand der Riemenscheibe (136, 138) zu befestigen.

8. Roboter nach Anspruch 7, wobei die Befestigungsplatten (139) so gekrümmt sind, daß sie den Riemen (137) entlang zweier paralleler Linien klammerartig befestigen.

9. Roboter nach Anspruch 6, wobei die Halterung entlang der Längsachse des ersten Arms (103) verschoben werden kann, um die Spannung des Riemens (137) einzustellen.

10. Roboter nach Anspruch 1 weiter mit einem dritten bewegbaren Arm (152), der durch ein drittes Servosystem (150) angetrieben wird, das einen dritten Servomotor umfaßt, wobei das dritte Servosystem (150) den bewegbaren Arm (152) in einer Richtung senkrecht zur Ebene antreibt, in der sich der erste und zweite Arm (103, 117) drehbar bewegen.

11. Roboter nach Anspruch 10, wobei die Steuerung (200) die Bahn der Bearbeitungsvorrichtung (151) auf der Basis von ersten Positionsdaten berechnet, die auf die Ausgangsposition der Bearbeitungsvorrichtung (151) hinweisen, von zweiten Positionsdaten, die auf die Bearbeitungsposition hinweisen, von dritten Positionsdaten, die auf eine gewünschte Entfernung hinweisen, durch die die Bearbeitungsvorrichtung (151) in eine erste Richtung von der Ausgangsposition aus verschoben werden muß, von vierten Positionsdaten, die auf eine gewünschte Entfernung hinweisen, durch die die Bearbeitungsvorrichtung (151) in eine zweite Richtung senkrecht zur ersten Richtung von einem Punkt verschoben werden muß, der durch die dritten Positionsdaten und die bekannten Beschleunigungs- und Verzögerungskennlinien des Servosystems festgelegt ist.

12. Roboter nach Anspruch 11, wobei die Steuerung (200) die Bahn der Bearbeitungsvorrichtung (151) berechnet, indem sie eine vorher eingestellte Formel verwendet, die eine erste Beschleunigungs- und Verzögerungskennlinie des ersten Servomotors (104) darstellt, eine zweite festgesetzte Formel, die eine zweite Beschleunigungs- und Verzögerungskennlinie des zweiten Servomotors (120) darstellt und eine dritte festgesetzte Formel, die eine dritte Beschleunigungs- und Verzögerungskennlinie des dritten Servomotors darstellt.

13. Industrieroboter, mit
einer Basis (102);
einer Bearbeitungsvorrichtung (151), die mit einem Werkzeug zur Durchführung einer vorbestimmten Arbeit bei einer vorbestimmten Bearbeitungsposition ausgerüstet ist;
einer Armeinrichtung (103, 117), die die Bearbeitungseinrichtung (151) lagert und die durch die Basis (102) gelagert ist, wobei die Armeinrichtung (103, 117) wenigstens einen bewegbaren Arm (103) in Bezug auf eine vorbestimmte Achse (103a) aufweist, und
einem Servosystem (108) zum Antreiben des bewegbaren Arms in eine gewünschte Position, dadurch gekennzeichnet, daß
eine Servosteuerung (200) schrittweise die gewünschte Position des bewegbaren Arms (103) gemäß einer vorbestimmten Tabelle berechnet und ein Steuersignal zum Servosystem (108) zu dessen Steuerung ausgibt, wobei die Steuerung (200) die gewünschte Position auf der Basis der ersten Positionsdaten berechnet, die auf die Ausgangsposition der Bearbeitungsvorrichtung (151) hinweisen, der zweiten Positionsdaten, die auf die Bearbeitungsposition (P₃) und auf die bekannten Kennlinien für die Beschleunigung und die Verzögerung des Servosystems (108) hinweisen, um die Bearbeitungsvorrichtung (151) zwischen der Ausgangsposition und der Bearbeitungsposition über einen Zwischenpunkt abseits der geraden Linie anzutreiben, die sich durch die Anfangs- und Bearbeitungsposition erstreckt, ohne die Bearbeitungsvorrichtung an irgendeinem Zwischenpunkt anzuhalten, und wobei die Servosteuerung (200) weiterhin das Servosystem (108) auf der Basis einer Zielgeschwindigkeit des Servosystems (108) steuert, um die Geschwindigkeit der Bearbeitungsvorrichtung (151) so zu steuern, daß die Geschwindigkeit des Servosystems beim Beschleunigen nichtlinear gesteigert und beim Verzögern nichtlinear verringert wird, um den Übergang zwischen der Beschleunigungsphase, der Verzögerungsphase und der konstanten Geschwindigkeitsphase zu glätten.

14. Roboter nach Anspruch 13, wobei das Servosystem (108) eine erste Servokomponente (104) umfaßt, die die Bearbeitungsvorrichtung (151) in einer ersten Richtung antreibt, und eine zweite Servokomponente (120), die die Bearbeitungsvorrichtung in einer zweiten Richtung senkrecht zur ersten Richtung antreibt.

15. Roboter nach Anspruch 14, wobei die Steuerung (200) die gewünschte Position der Bearbeitungsvorrichtung (151) auf der Basis der ersten Positionsdaten berechnet, die auf die Ausgangsposition der Bearbeitungsvorrichtung (151) hinweisen, der zweiten Positionsdaten, die auf die Bearbeitungsposition hinweisen, der dritten Positionsdaten, die auf die gewünschte Entfernung hinweisen, durch die die Bearbeitungsvorrichtung (151) in der ersten Richtung von der Ausgangsposition aus verschoben werden muß, der vierten Positionsdaten, die auf die gewünschte Entfernung hinweisen, durch die die Bearbeitungsvorrichtung (151) in einer zweiten Richtung von einem Punkt aus verschoben werden muß, der durch die dritten Positionsdaten und durch die bekannten Beschleunigungs- und Verzögerungskennlinien des Servosystems festgelegt ist.

16. Roboter nach Anspruch 15, wobei das Servosystem eine dritte Servokomponente (150) aufweist, die die Bearbeitungsvorrichtung (151) in einer dritten Richtung senkrecht zur ersten und zweiten Richtung antreibt.

17. Roboter nach Anspruch 16, wobei die Steuerung die gewünschte Position auf der Basis der Beschleunigungs- und Verzögerungskennlinie der dritten Servokomponente (150) berechnet.

18. Roboter nach Anspruch 13, wobei die Armeinrichtung einen ersten Arm (103) umfaßt, der durch die Basis (102) drehbar gelagert ist und einen zweiten Arm (117), der drehbar am freien Ende des ersten Arms (103) gelagert ist, und wobei das Servosystem (108, 119) ein erstes Servosystem (108) umfaßt, das auf der Basis (102) zum Antrieb des ersten Arms (103) montiert ist und ein zweites Servosystem (119), das auf der Basis zum Antrieb des zweiten bewegbaren Arms (117) montiert ist.

19. Roboter nach Anspruch 1 oder 18, wobei der erste Arm (103) um eine im wesentlichen vertikale Hauptachse (103a) drehbar ist, die sich durch eine Achse der Basis (102) erstreckt, und der zweite Arm (117) um eine im wesentlichen vertikale Nebenachse (117a) drehbar ist.

20. Roboter nach Anspruch 19, wobei die Drehachsen der Servomotore (104, 120) für das erste und zweite Servosystem (108, 119) im wesentlichen miteinander fluchten.

21. Roboter nach Anspruch 20, wobei die Achsen der Servomotore (104, 120) des ersten und zweiten Servosystems (108, 119) mit der Achse der Basis (102) fluchten.

22. Roboter nach Anspruch 1 oder 18, wobei der Servomotor (120) des zweiten Servosystems (119) mit dem zweiten Arm (117) durch einen Riemenantrieb (136-137-118) zur Kraftübertragung diesen antreibend verbunden ist.

23. Roboter nach Anspruch 22, wobei der Riemenantrieb (136-137-118) zur Kraftübertragung eine antreibende Riemenscheibe (136) aufweist, die durch den Servomotor (120) des zweiten Servosystems (119) angetrieben wird, eine getriebene Riemenscheibe (118), die an einer Drehwelle (116) befestigt ist, die mit dem freien Ende des ersten Arms (103) verbunden ist und an dem zweiten Arm (117), um sich mit ihm zu verdrehen, befestigt ist, und einem Riemen (137), der zwischen der treibenden und der getriebenen Riemenscheibe (136, 118) gespannt ist.

24. Roboter nach Anspruch 23, wobei der Riemen (137) einen ersten und zweiten Bereich aufweist, die radialsymmetrisch um den Riemen (137) angeordnet sind, wobei der Riemen mit der treibenden Riemenscheibe (136) in einem ersten Bereich und mit der getriebenen Riemenscheibe (118) in einem zweiten Bereich befestigt ist.

25. Roboter nach Anspruch 24, wobei eine Befestigungsplatte (139) auf dem ersten und zweiten Bereich des Riemens (137) befestigt ist, wobei die Befestigungsplatten (139) mit der treibenden bzw. der getriebenen Riemenscheibe (136, 118) durch Befestigungsschrauben (145) derart befestigt sind, daß der Riemen (137) mit der peripheren Wand der Riemenscheibe kraftschlüssig befestigt ist.

26. Roboter nach Anspruch 25, wobei jede Befestigungsplatte (139) gekrümmt ausgebildet ist, so daß sie den Riemen (137) entlang zweier paralleler Linien klammerartig befestigt.

27. Verfahren zur Steuerung der Position der Bearbeitungsvorrichtung bei einem Industrieroboter, der eine Bearbeitungsvorrichtung aufweist, die mit einem Werkzeug (117c) zur Durchführung einer vorbestimmten Arbeit ausgerüstet ist, einer bewegbaren Armeinrichtung (103, 117), die die Bearbeitungsvorrichtung zwischen einer Ausgangsposition und einer Bearbeitungsposition befördert und mit einem Servosystem in Verbindung steht, das eine erste Servokomponente (104) umfaßt, die die bewegbare Armeinrichtung (103, 117) in einer ersten Richtung derart antreibt, daß die Bearbeitungsvorrichtung in der ersten Richtung angetrieben wird, und eine zweite Servokomponente (120), die die bewegbare Armeinrichtung in einer zweiten Richtung senkrecht zur ersten Richtung derart antreibt, daß die Bearbeitungsvorrichtung in der zweiten Richtung angetrieben wird, mit den folgenden Verfahrensschritten:
Voreinstellung von ersten bzw. zweiten Positionsdaten zur Festlegung der Ausgangsposition bzw. der Bearbeitungsposition:
Voreinstellung von dritten bzw. vierten Positionsdaten, wobei die dritten Positionsdaten eine gewünschte Entfernung darstellen, in welcher die Bearbeitungsvorrichtung in der ersten Richtung verschoben werden muß, und wobei die vierten Positionsdaten eine gewünschte Entfernung darstellen, in welcher die Bearbeitungsvorrichtung in der zweiten Richtung verschoben werden muß;
Voreinstellung der Kennlinien für die Beschleunigung und die Verzögerung der ersten und zweiten Servokomponenten;
schrittweises Berechnen der Positionen der Bearbeitungsvorrichtung entlang einer Bahn auf der Basis der voreingestellten Daten sowie Berechnen der Geschwindigkeit und Richtung der Bearbeitungsvorrichtung bei der gewünschten Position, wobei die Geschwindigkeit und die Richtung die Vektorsumme einer ersten Geschwindigkeitskomponente in der ersten Richtung sind, die gemäß der voreingestellten Kennlinie für die Beschleunigung und die Verzögerung der ersten Servokomponente festgelegt ist, und einer zweiten Geschwindigkeitskomponente in der Richtung, die gemäß der voreingestellten Komponenten und Verzögerungskennlinien der zweiten Servokomponente festgelegt ist; und
Betreiben des Servosystems (108, 119) derart, daß die Bearbeitungsvorrichtung zwischen der Ausgangsposition und der Bearbeitungsposition ohne an einem Zwischenpunkt anzuhalten verschoben wird.

28. Verfahren nach Anspruch 27, wobei jede erste und zweite Servokomponente (104, 120) die Geschwindigkeit der Bearbeitungsvorrichtung während der Beschleunigung nichtlinear vergrößert und die Geschwindigkeit während der Verzögerung nichtlinear vermindert, um einen sanften Übergang zwischen der Beschleunigungsphase, der Verzögerungsphase und der konstanten Geschwindigkeitsphase sicherzustellen.

29. Verfahren nach Anspruch 28, wobei das Servosystem eine dritte Servokomponente zum Antreiben der Bearbeitungsvorrichtung in einer dritten Richtung senkrecht zur ersten und zweiten Richtung umfaßt, und wobei die hergeleitete Geschwindigkeit und Richtung der Bearbeitungsvorrichtung die Vektorsumme der ersten Geschwindigkeitskomponente ist, wobei die zweite Geschwindigkeitskomponente in der dritten Richtung gemäß der Beschleunigungskennlinie der dritten Servokomponente festgelegt ist.

## Revendications

1. Robot industriel, comprenant :
une base (102),
une extrémité de travail (117b, 117c) équipée d'un outil destiné à exécuter une opération prédéterminée à une position prédéterminée de travail (P₃),
un dispositif à bras (103, 117) supportent l'extrémité de travail (117b, 117c) et supportée par la base (102), le dispositif à bras (103, 117) comprenant un premier bras (103) supporté de manière articulée par la base (102) et un second bras (117) supporté de manière articulée par une extrémité libre du premier bras (103),
un premier système d'asservissement (108) monté sur la base (102) et destiné à entraîner le premier bras, et
un second système d'asservissement (119) monté sur la base (102) et destiné à entraîner le second bras (117),
caractérisé en ce que
un organe de commande d'asservissement (200) dérive par itération les positions voulues du premier et du second bras (103, 117) d'après un plan prédéterminé et transmet des signaux de commande au premier et au second système d'asservissement (108, 119) pour la commande de ceux-ci en fonction des positions voulues dérivées d'une manière telle que l'extrémité de travail (117b, 117c) est déplacée en fonction du plan prédéterminé suivant un trajet non rectiligne, et d'une position initiale (Pₒ) à la position de travail (P₃) autour d'un obstacle (14) qui existe de manière connue entre ces points sans arrêt de l'extrémité de travail (117b, 117c) en un point intermédiaire quelconque, et l'organe de commande d'asservissement commande en outre les servomoteurs (104, 120) des systèmes d'asservissement (108, 119) d'après une vitesse cible des servomoteurs (104, 120) pour la commande de la vitesse de l'extrémité de travail (117b, 117a) si bien que la vitesse du moteur est accrue de manière non linéaire lors de l'accélération et est réduite de manière non linéaire lors de la décélération afin que la transition entre les épisodes en accélération et en décélération et les épisodes à vitesse constante soit régularisée.

2. Robot salon la revendication 1, dans lequel le second système d'asservissement (119) est monté sur le premier bras (103) avec son axe vertical sensiblement aligné sur l'axe vertical du premier système d'asservissement (108).

3. Robot selon la revendication 2, qui comporte en outre un dispositif de montage (128) du second servomoteur (120), le dispositif de montage étant monté sur le premier bras (103), l'axe vertical du second système d'asservissement (119) étant aligné de façon générale sur l'axe vertical du premier système d'asservissement (108).

4. Robot selon la revendication 3, dans lequel chacun des premier et second systèmes d'asservissement (108, 119) comporte un servomoteur (104, 120) et le servomoteur (120) du second système d'asservissement (119) est associé au second bras (117) de manière qu'ils s'entraînent par l'intermédiaire d'une transmission à courroie (136-137-118).

5. Robot selon la revendication 4, dans lequel la transmission à courroie (136-137-118) comporte une poulie menante (136) entraînée par le servomoteur (120) du second système d'asservissement (119), une poulie menée (118) fixée à un arbre rotatif (116) fixé à l'extrémité du premier bras (103) distante de l'axe vertical (103a) du premier système d'asservissement (108) et fixé au second bras (117) de manière qu'il tourne avec lui, et une courroie (137) tendue entre les poulies menante et menée (136, 118).

6. Robot selon la revendication 5, dans lequel la courroie (137) a un premier et un second tronçon disposés radialement de manière symétrique autour de la courroie (137), la courroie étant fixée à la poulie menante (136) dans le premier tronçon et à la poulie menée (118) dans le second tronçon.

7. Robot selon la revendication 6, dans lequel la courroie (137) est une courroie d'acier, et une plaque de fixation (139) est montée sur chacun des premier et second tronçons de la courroie (137), et des plaques de fixation (139) sont fixées aux poulies menante et menée (136, 118) respectivement par des boulons de fixation (145) afin que la courroie (137) soit fixée à la paroi périphérique de la poulie (136, 118).

8. Robot selon la revendication 7, dans lequel chacune des plaques de fixation (139) est courbe afin qu'elle serre la courroie (137) le long de deux droites parallèles.

9. Robot selon la revendication 6, dans lequel le dispositif de montage (128) peut être déplacé le long de l'axe longitudinal du premier bras (103) afin que la tension de la courroie (137) soit ajustée.

10. Robot selon la revendication 1, qui comporte en outre un troisième bras mobile (152) entraîné par un troisième système d'asservissement (150) comprenant un troisième servomoteur, le troisième système d'asservissement (150) entraînant le bras mobile (152) en direction perpendiculaire au plan dans lequel le premier et le second bras (103, 117) se déplacent par pivotement.

11. Robot selon la revendication 10, dans lequel l'organe de commande (200) dérive le trajet de l'extrémité de travail (151) de premières données de position représentatives de la position initiale de l'extrémité de travail (151), de secondes données de position représentatives de la position de travail, de troisièmes données de position représentatives de la distance voulue pour le déplacement de l'extrémité de travail (151) dans une première direction depuis la position initiale, et quatrièmes données de position représentatives d'une distance voulue de déplacement de l'extrémité de travail (151) dans une seconde direction perpendiculaire à la première à partir d'un point identifié par les troisièmes données de position et d'après les caractéristiques connues d'accélération et de vitesse du système d'asservissement.

12. Robot selon la revendication 11, dans lequel l'organe de commande (200) dérive le trajet de l'extrémité de travail (151) à l'aide d'une première formule préréglée représentant des premières caractéristiques d'accélération et de décélération du premier servomoteur (104), d'une seconde formule préréglée représentent les secondes caractéristiques d'accélération et de décélération du second servomoteur (120), et d'une troisième formule préréglée représentant les troisièmes caractéristiques d'accélération et de décélération du troisième servomoteur.

13. Robot industriel, comprenant :
une base (102),
une extrémité de travail (151) équipée d'un outil destiné à exécuter une opération prédéterminée dans une position prédéterminée de travail,
un dispositif à bras (103, 117) supportant l'extrémité de travail (151) et supporté par la base (102), le dispositif à bras (103, 117) comprenant au moins un bras mobile (103) par rapport à un axe prédéterminé (103a), et
un dispositif d'asservissement (108) destiné à entraîner le bras mobile vers une position voulue,
caractérisé en ce que
un organe (200) de commande d'asservissement dérive par itération la position voulue du bras mobile (103) en fonction d'un plan prédéterminé et transmet un signal de commande au système d'asservissement (108) pour la commande de celui-ci, l'organe de commande (200) dérive la position voulue d'après des premières données de position représentatives de la position initiale de l'extrémité de travail (151), et des secondes données de position représentatives de la position de travail (P₃) et de caractéristiques connues d'accélération et de décélération du système d'asservissement (108), afin que l'extrémité de travail (151) soit déplacée entre la position initiale et la position de travail par un point intermédiaire décalé par rapport à une droite passant par les positions initiale et de travail, sans arrêt de l'extrémité de travail en un point intermédiaire quelconque, et l'organe de commande d'asservissement (200) commande en outre le système d'asservissement (108) en fonction d'une vitesse cible du système d'asservissement (108) afin que la vitesse de l'extrémité de travail (151) soit réglée d'une manière telle que la vitesse du système d'asservissement augmente de façon non linéaire lors de l'accélération et diminue de façon non linéaire lors de la décélération, afin que la transition entre les épisodes d'accélération et de décélération et les épisodes à vitesse constante soit régularisée.

14. Robot selon la revendication 13, dans lequel le système d'asservissement (108) comprend un premier élément d'asservissement (104) qui entraîne l'extrémité de travail (151) dans une première direction et un second élément d'asservissement (120) qui entraîne l'extrémité de travail dans une seconde direction qui est perpendiculaire à la première.

15. Robot selon la revendication 14, dans lequel l'organe de commande (200) dérive la position voulue de l'extrémité de travail (151) d'après des premières données de position représentatives de la position initiale de l'extrémité de travail (151), des secondes données de position représentatives de la position de travail, des troisièmes données de position représentatives d'une distance sur laquelle l'extrémité de travail (151) doit se déplacer dans la première direction depuis la position initiale, des quatrièmes données de position représentatives de la distance sur laquelle l'extrémité de travail (151) doit se déplacer dans une seconde direction à partir d'un point identifié par les troisièmes données de position, et les caractéristiques connues d'accélération et de décélération du système d'asservissement.

16. Robot selon la revendication 15, dans lequel le système d'asservissement comprend un troisième élément d'asservissement (150) qui entraîne l'extrémité de travail (151) dans une troisième direction perpendiculaire à la première et à le seconde direction.

17. Robot selon la revendication 16, dans lequel l'organe de commande dérive la position voulue d'après les caractéristiques d'accélération et de décélération du troisième élément d'asservissement (150).

18. Robot selon la revendication 13, dans lequel le dispositif à bras comporte un premier bras (103) supporté de manière articulée sur la base (102) et un second bras (117) supporté de manière articulée par une extrémité libre du premier bras (103), et le système d'asservissement (108, 119) comprend un premier système d'asservissement (108) monté sur la base (102) et destiné à entraîner le premier bras (103), et un second système d'asservissement (119) monté sur la baie et destiné à entraîner le second bras mobile (117).

19. Robot selon la revendication 1 ou 18, dans lequel le premier bras (103) peut pivoter autour d'un axe primaire essentiellement vertical (103a) passant par un axe de la base (102), et le second bras (117) peut pivoter autour d'un axe secondaire sensiblement vertical (117a).

20. Robot selon la revendication 19, dans lequel les axes de rotation des servomoteurs (104, 120) du premier et du second système d'asservissement (108, 119) sont pratiquement alignés l'un sur l'autre.

21. Robot selon la revendication 20, dans lequel les axes de rotation des servomoteurs (104, 120) du premier et du second système d'asservissement (108, 119) sont alignés sur l'axe de la base (102).

22. Robot selon la revendication 1 ou 18, dans lequel le moteur d'asservissement (120) du second système d'asservissement (119) est associé au second bras (117) qu'il entraîne par une transmission à courroie (136-137-118).

23. Robot selon la revendication 22, dans lequel la transmission à courroie (136-137-118) comprend une poulie menante (136) entraînée par le servomoteur (120) du second système d'asservissement (119), une poulie menée (118) fixée à un arbre rotatif (116) fixé à l'extrémité libre du premier bras (103) et fixé au second bras (117) afin qu'il tourne avec lui, et une courroie (137) tendue entre les poulies menante et menée (136, 118).

24. Robot selon la revendication 23, dans lequel la courroie (137) a un premier et un second troncon disposés radialement de manière symétrique par rapport à la courroie (137), la courroie étant fixée à la poulie menante (136) dans le premier tronçon et à la poulie menée (118) dans le second tronçon.

25. Robot selon la revendication 24, dans lequel une plaque de fixation (139) est fixée sur chacun des premier et second tronçons de la courroie (137), et les plaques de fixation (139 sont fixées aux poulies menante et menée (136, 118) respectivement par des boulons de fixation (145) afin que la courroie (137) soit serrée à la paroi périphérique de la poulie.

26. Robot selon la revendication 25, dans lequel chacune des plaques de fixation (139) est courbe afin qu'elle serre la courroie (137) suivant deux droites parallèles.

27. Dans un robot industriel ayant une extrémité de travail équipée d'un outil (117c) destiné à exécuter une opération prédéterminée, un dispositif à bras mobiles (103, 117) transportant l'extrémité de travail entre une position initiale et une position de travail et associé à un système d'asservissement qui comporte un premier élément d'asservissement (104) qui entraîne le dispositif à bras mobiles (103, 117) dans une première direction afin qu'il entraîne l'extrémité de travail dans la première direction et un second élément d'asservissement (120) qui entraîne le dispositif à bras mobiles dans une seconde direction perpendiculaire à la première afin que l'extrémité de travail soit entraînée dans la seconde direction, un procédé de commande de la position de l'extrémité de travail comprenant les étapes suivantes :
le préréglage de premières et de secondes données de position identifiant la position initiale et la position de travail respectivement,
le préréglage de troisièmes et quatrièmes données de position, les troisièmes données de position représentant une distance voulue pour le déplacement de l'extrémité de travail dans la première direction, et les quatrièmes données de position représentant une distance voulue de déplacement de l'extrémité de travail dans la seconde direction,
le préréglage de caractéristiques d'accélération et de décélération du premier et du second élément d'asservissement,
La dérivation par itération de positions d'extrémité de travail le long d'une trace en fonction de données préréglées, ainsi que la dérivation d'une vitesse et d'une direction de l'extrémité de travail dans la position voulue, la vitesse et la direction étant la somme vectorielle d'une première composante de vitesse dans la première direction déterminée d'après les caractéristiques préréglées d'accélération et de décélération du premier élément d'asservissement, et d'une seconde composante de vitesse dans la seconde direction déterminée d'après la composante préréglée et les caractéristiques de décélération du second élément d'asservissement, et
la commande du système d'asservissement (108, 119) afin que l'extrémité de travail soit déplacée entre la position initiale et la position de travail sans arrêt à un point intermédiaire quelconque.

28. Procédé selon la revendication 27, dans lequel chacun des premier et second élément d'asservissement (104, 120) accroît la vitesse de l'extrémité de travail de manière non linéaire pendant l'accélération et réduit la vitesse de l'extrémité de travail de manière non linéaire pendant la décélération afin qu'une transition régulière soit assurée entre les états d'accélération et de décélération et les états à vitesse constante.

29. Procédé selon la revendication 28, dans lequel le système d'asservissement comprend un troisième élément d'asservissement qui entraîne l'extrémité de travail dans une troisième direction perpendiculaire à la première et à la seconde, et la vitesse et la direction dérivées de l'extrémité de travail sont sous forme de la somme vectorielle de la première composante de vitesse, et de la seconde composante de vitesse dans la troisième direction déterminée en fonction des caractéristiques d'accélération du troisième élément d'asservissement.
